# FASCICULE DE BREVET EUROPEEN

(11) **EP 3 633 625 B1**
(45) Date de publication et mention de la délivrance du brevet: **11.05.2022**
(21) Numéro de dépôt: 19201284.7
(22) Date de dépôt: 03.10.2019
(51) Int. Cl.: G06T 15/04, G06T 19/00, G06T 11/00

(54) **PROCEDE DE TEXTURATION D'UN MODELE 3D**
VERFAHREN ZUR TEXTURIERUNG VON 3D MODELLEN
METHOD FOR TEXTURING A 3D MODEL

(30) Priorité: 03.10.2018 FR 1859189
(43) Date de publication de la demande: 08.04.2020
(73) Titulaire: Soletanche Freyssinet, 92500 Rueil-Malmaison (FR)
(72) Inventeur: PERAZIO, Guy, 38160 Saint-Romans (FR); PERAL, José, 38430 Moirans (FR); VALCKE, Serge, 38140 Apprieu (FR); CHAMBAUD, Luc, 38430 Moirans (FR)
(74) Mandataire: Nony

(56) Documents cités:
- JUNHUA KANG ET AL: "AUTOMATIC TEXTURE RECONSTRUCTION OF 3D CITY MODEL FROM OBLIQUE IMAGES", ISPRS - INTERNATIONAL ARCHIVES OF THE PHOTOGRAMMETRY, REMOTE SENSING AND SPATIAL INFORMATION SCIENCES, vol. XLI-B1, 3 juin 2016 (2016-06-03), pages 341-347, XP055589749, DOI: 10.5194/isprsarchives-XLI-B1-341-2016
- ZHOU GUOQING ET AL: "Texture mapping based on multiple aerial imageries in urban areas", VISUAL COMMUNICATIONS AND IMAGE PROCESSING; 20-1-2004 - 20-1-2004; SAN JOSE,, vol. 9808, 9 décembre 2015 (2015-12-09), pages 98080Z-98080Z, XP060063020, DOI: 10.1117/12.2207625 ISBN: 978-1-62841-730-2
- ZSOLT JANKÓ ET AL: "Creating entirely textured 3D models of real objects using surface flattening", MACHINE GRAPHICS AND VISION, INSTITUTE OF COMPUTER SCIENCE, WARZAW, PL, vol. 14, no. 4, 1 janvier 2005 (2005-01-01), pages 379-398, XP002691168, ISSN: 1230-0535

## Description

L'invention concerne un procédé de texturation d'un modèle numérique 3D.

Pour afficher un modèle numérique d'une scène incluant un ensemble d'objets 3D réels, par exemple sur un écran ou au moyen d'un casque de réalité augmentée, il est connu de construire des surfaces 3D qui modélisent l'enveloppe externe de chacun des objets. Pour cela, une méthode connue consiste à mailler, au moyen d'éléments surfaciques, généralement de forme triangulaire, un nuage de points obtenu par une méthode de mesure du relief de l'objet, telle que la stéréoscopie ou le Lidar (acronyme anglais de « Light Détection And Ranging »). Les points définissent alors des sommets des éléments surfaciques du maillage. Une telle méthode est par exemple décrite dans la note de cours « *Maillage 2D, surfacique et 3D* », Pascal Frey et Frédéric Hecht ; dans la thèse de Samuel Bidal (2003) « *Reconstruction tridimensionnelle d'éléments anatomiques et génération automatique d'éléments finis optimisés* » ; dans la thèse de Souhail Hajri (2010) *« modélisation des surfaces rocheuses naturelles à partir d'une scannérisation laser 3D et extraction automatique de formes caractéristiques : application aux spéléothèmes et surfaces géologiques* ».

En outre, J. Kang et al: "Automatic texture reconstruction of 3D city model from oblique images" divulgue une méthode de texturation d'un modèle 3D à partir d'images acquises.

Une étape de texturation de la surface maillée est ensuite mise en œuvre, au cours de laquelle une propriété, généralement une couleur, est attribuée à chaque élément de la surface maillée. Afin que l'affichage de la surface maillée et texturée représente visuellement la scène le plus fidèlement possible, la plupart des modèles de texturation visent à attribuer une couleur proche de celle de la partie de l'objet que l'élément de maillage vise à modéliser. Par exemple, lorsque le nuage de points est obtenu par acquisition photographique d'images, une couleur peut être associée à chaque point du nuage de points, dans un espace colorimétrique défini, par exemple RGB. Une texture peut ensuite être associée à chaque élément surfacique en interpolant, par exemple linéairement entre les sommets de l'élément, les données colorimétriques associées.

La couleur réelle de l'objet entre des points du nuage n'est donc pas prise en compte, si bien que l'affichage du modèle numérique peut résulter en la production d'artefacts visuels. Une augmentation conséquente du nombre de points du nuage est un des moyens envisageables pour réduire le nombre d'artefacts visuels, mais elle est alors accompagnée d'un accroissement sensiblement exponentiel du nombre d'éléments surfaciques. Il est alors nécessaire d'utiliser des ordinateurs dotés de cartes graphiques puissantes et coûteuses pour afficher le modèle numérique.

Il existe donc un besoin pour un modèle numérique 3D surmontant les inconvénients listés ci-dessus.

L'invention vise à satisfaire ce besoin, et concerne un procédé de texturation d'un modèle 3D selon la revendication 1.

Pour un même nombre de points, le modèle 3D texturé obtenu par le procédé selon l'invention comporte plus de détails de la scène qu'un modèle 3D texturé obtenu par la méthode d'interpolation de l'art antérieur décrite ci-dessus. Le modèle 3D texturé peut en outre être affiché sans qu'il soit nécessaire de mettre en œuvre une carte graphique plus puissante. En outre, son affichage rend compte plus fidèlement de la scène.

Par « scène », il faut comprendre une partie d'un environnement pouvant être observée par un dispositif d'acquisition d'images lorsque celui-ci est immobile à un emplacement donné.

L'environnement peut être une installation souterraine, par exemple une galerie d'un égout ou d'une mine, ou être extérieur. Il peut notamment être urbain ou rural.

La scène comporte au moins un, de préférence plusieurs objets. L'objet peut être un ouvrage, par exemple un pont ou un tunnel, un immeuble, une maison, un stade, un navire, un entrepôt, un élément de mobilier urbain, par exemple un abribus, un panneau de signalisation, un feu de signalisation. Il peut être un meuble ou un article ornemental. Il peut être un élément naturel, par exemple un arbre ou un rocher.

A l'étape a), le nuage de points peut être obtenu par reconstruction à partir d'images de la scène qui se recoupent, d'une acquisition LIDAR ou encore d'une utilisation conjointe de ces deux techniques.

De préférence, le procédé comporte une étape, préalable à l'étape a), dans laquelle on discrétise la scène sous la forme du nuage de points, à partir d'une banque d'images comportant des images représentant chacune une portion de la scène vue par au moins une caméra et dans laquelle au moins deux images acquises en différentes positions représentent des portions de la scène qui se recouvrent. La banque d'images est de préférence identique à celle utilisée à l'étape i).

La discrétisation de la scène est de préférence effectuée par traitement photogrammétrique des images de la banque. Ainsi, les images servent avantageusement à la fois à générer le nuage de points et à texturer un élément surfacique du modèle 3D. Le traitement photogrammétrique peut mettre en œuvre un algorithme classique de stéréovision, qui identifie des éléments constitutifs d'une scène sur différentes images acquises selon des axes de vue différents, puis détermine les positions relatives desdits éléments constitutifs. Par exemple, le traitement photogrammétrique est mis en œuvre au moyen du logiciel PhotoScan édité par la société Agisoft.

La banque d'images peut être enregistrée sur un support informatique de stockage, par exemple un disque dur ou une mémoire de type SSD ou Flash. Les images sont de préférence enregistrées dans un format brut, par exemple de type .raw. Par format « brut », on entend un format d'enregistrement d'image dans lequel l'information colorimétrique recueillie par le capteur d'une caméra est retranscrite directement à un pixel de l'image, sans être altérée par une étape de développement et de compression numérique, comme c'est le cas par exemple lors de l'enregistrement d'un fichier de type .jpg ou .png. Les images peuvent comporter chacune plus de 1 million, voire plus de 4 millions, voire plus de 8 millions, mieux plus de 16 millions de pixels.

La banque d'images peut comporter des images représentant des portions de scènes différentes. Par exemple, elle comporte plus de 200 millions d'images.

Au moins deux images de la banque acquises en différentes positions représentent des portions de la scène qui se recouvrent. Le recouvrement des images facilite la discrétisation de la scène, notamment par photogrammétrie. De préférence, le taux de recouvrement entre lesdites deux images est supérieur à 70 %, voire supérieur à 80 %, par exemple supérieur à 90 %. Le recouvrement angulaire peut être calculé :
- optionnellement, en projetant l'une des deux images dans un plan dont la normale est parallèle à l'axe de vue de la caméra dans la position dans laquelle a été prise l'autre image, puis
- en appariant, par exemple par corrélation d'images, l'image, optionnellement projetée, et l'autre image acquise, de manière déterminer la zone commune entre l'image, optionnellement projetée, et l'autre image, et
- en exprimant en pourcentages, le rapport du nombre de pixels de la zone appariée sur le nombre de pixels de l'autre image.

Par exemple, l'étape de projection décrite ci-dessus est effectuée lorsque l'angle entre les axes de vues de la ou des caméras dans les différentes positions est supérieure à 5°.

De préférence la banque d'images comporte des images acquises en un même emplacement d'acquisition par différentes caméras. De cette manière, la construction du nuage de points est facilitée, ces images pouvant être corrélées entre elles. De préférence, la banque comporte des images acquises en un même emplacement d'acquisition, par exemple par des caméras orientées différemment les unes des autres, représentant la scène sur une ouverture angulaire supérieure à 90°, voire supérieure à 180°, voire supérieure à 270°, en particulier égale à 360°.

Une image comporte, en chaque pixel qui la compose, au moins une information de pixel. L'information de pixel caractérise une propriété du matériau constitutif de la partie de la scène imagée par la caméra dans le pixel. L'information de pixel peut résulter de l'acquisition de l'image par la caméra. En variante, l'information de pixel peut être mesurée indépendamment de la façon dont l'image est acquise et être attribuée postérieurement au pixel après l'acquisition de l'image.

De préférence, l'information de pixel est une couleur, définie dans un espace colorimétrique, par exemple RGB ou CMNY. Les images de la banque sont alors par exemple acquises par au moins une caméra comportant un capteur de lumière dans le visible.

En variante, l'information de pixel peut être choisie parmi :
- une propriété thermique, par exemple choisie parmi un flux thermique et une température,
- une propriété optique, par exemple une brillance ou un indice de réfraction,
- une propriété électromagnétique, par exemple une intensité de champ magnétique,
- une propriété mécanique, par exemple choisie parmi une dureté et un module d'élasticité,
- une propriété radiologique, par exemple un flux de rayons gamma,
- une propriété hydrique, par exemple un taux d'humidité.

Chaque image peut comporter pour chaque pixel qui la compose, plusieurs informations de pixels différentes l'une de l'autre. Par exemple, une image peut comporter en chaque pixel la couleur et la température de la partie d'un objet imagé dans le pixel.

Par ailleurs, la banque d'images peut comporter des métadonnées, de préférence associées à chaque image, voire à chaque pixel de chacune des images.

Les métadonnées peuvent comporter au moins une information relative à la caméra choisie parmi un identifiant de la caméra ayant acquis l'image, la position et la précision sur la position, par exemple relevée par GPS de la caméra ayant acquis l'image, l'orientation de l'axe de vue de la caméra, ainsi que la distance focale et l'ouverture de l'objectif de la caméra. Par position de la caméra, on considère la position, dans un référentiel de la scène, du centre du plan image de la caméra, par lequel passe l'axe optique de la caméra. Par orientation de la caméra, on considère la direction de l'axe optique de la caméra. Les métadonnées peuvent comporter la date d'acquisition de l'image, et autres données EXIF. Par ailleurs, les coordonnées x, y, z du système associé au modèle 3D peuvent être également ajoutées à ces métadonnées.

Par ailleurs, la banque d'images comporte de préférence au moins une, de préférence une pluralité d'images dont la portion représentant la zone de l'objet modélisée par l'élément surfacique présente une résolution supérieure à 50 px.mm⁻² [pixels par millimètre carré], de préférence supérieure à 70 px.mm⁻², de préférence supérieure à 80 ppx.mm⁻², voire de préférence supérieure à 90 px.mm⁻², mieux supérieure ou égale à 100 px.mm⁻², sur la base de l'aire de la surface de la zone de l'objet modélisée par l'élément surfacique. Ainsi, il est possible d'attribuer une texture à l'élément surfacique avec une résolution de l'ordre de, voire supérieure à, celle de l'œil humain. Autrement dit, un observateur d'un affichage du modèle 3D texturé obtenu par le procédé selon l'invention peut discerner dans l'élément surfacique tous les détails de la zone de l'objet qu'il observerait réellement s'il était face à l'objet.

De préférence, préalablement à l'étape a), on génère la banque d'images mise en œuvre à l'étape i) en déplaçant, en une pluralité d'emplacements d'acquisition, un dispositif de scan comportant au moins une caméra, et on acquiert, en chaque emplacement d'acquisition, une portion de la scène vue par le dispositif de scan en prenant au moins une image au moyen de la caméra, les emplacements d'acquisition étant choisis de telle sorte que les portions de la scène vues par le dispositif de scan en deux emplacements d'acquisition consécutifs respectifs se recouvrent au moins partiellement. De préférence, le dispositif d'acquisition comporte un module d'acquisition comportant une canne et au moins deux étages d'acquisition disposés à des hauteurs différentes sur la canne, chaque étage d'acquisition comportant une pluralité de caméras configurées pour acquérir chacune une image de la scène, les axes de vue des caméras d'un étage d'acquisition étant répartis angulairement autour de l'axe de la canne de sorte que les images acquises se recouvrent angulairement. La canne peut être adaptée à être portée par un opérateur se déplaçant dans l'environnement. Elle peut comporter en partie inférieure un pied permettant de la poser sur le sol. Le dispositif peut comporter au moins trois, de préférence trois étages d'acquisition. Les caméras de chaque étage étant réparties autour de l'axe longitudinal de la canne, sur un secteur angulaire total compris entre 90° et 120°, de préférence compris entre 150° et 190°, en particulier égal à 180°. L'espacement entre les étages d'acquisition peut être réglable. Les caméras d'un étage d'acquisition sont de préférence fixes les unes par rapport aux autres. Le module d'acquisition peut comporter au moins six, de préférence au moins dix, de préférence au moins douze, notamment quinze caméras.

L'acquisition des images est de préférence réalisée au moyen du dispositif d'acquisition d'images décrit dans la demande FR 1856591 incorporée ici par référence.

A l'étape a), le maillage du nuage de points est effectué au moyen d'éléments surfaciques. Il peut être réalisé au moyen d'un logiciel spécifique, dénommé mailleur, bien connu de l'homme du métier, comme par exemple 3D Reshaper ou Photoscan. Le maillage formé à l'étape a) peut comporter, voire consister en des éléments quadrangulaires et/ou de préférence des éléments surfaciques triangulaires, mieux adaptés au maillage de surfaces 3D.

De préférence le rapport du nombre d'images de la banque représentant la scène sur le nombre d'éléments du maillage surfacique est supérieur à 1, de préférence supérieur à 100, de préférence supérieur à 300. Ainsi, la banque d'images comporte une quantité particulièrement élevée d'informations de pixels pour définir une texture détaillée pour chaque élément surfacique du maillage.

A l'étape b), par « dépliage », on entend l'opération mathématique par laquelle on fait correspondre le modèle 2D au modèle 3D, en associant un couple unique de coordonnées 2D, généralement noté (u, v), d'un sommet d'un polygone du maillage plan, à un sommet de l'élément surfacique du maillage 3D qui lui correspond. Autrement dit, après dépliage du modèle 3D, on obtient un « patron à plat» qui comporte dans un unique plan, l'ensemble des surfaces tridimensionnelles du modèle 3D aplaties dans le plan. Une telle opération, bien connue de l'homme du métier, est classiquement connue sous le nom de cartographie UV ou « UV Mapping » en anglais.

Par « maillage plan formé de polygones », on comprend que tous les sommets des polygones du maillage sont contenus dans un plan.

De préférence, le nombre de sommets d'un polygone et d'un élément surfacique correspondant sont identiques. De préférence, chaque polygone est un triangle et chaque élément surfacique est un triangle.

De préférence, le polygone et l'élément surfacique présentent la même forme et les mêmes dimensions.

Le dépliage permet la texturation de modèles 3D, simples ou complexes.

Le modèle 2D peut comporter une ou plusieurs surfaces 2D maillées connexes, de préférence une unique surface 2D maillée connexe. Par surface « connexe » on entend une surface délimitée par une unique ligne de contour se refermant sur elle-même. Par exemple, la surface définie par un rectangle est une surface connexe. Au contraire, la surface délimitée par deux cercles concentriques de diamètres différents n'est pas connexe.

De préférence, l'étape b) de dépliage est menée de manière à obtenir le plus faible nombre possible de surfaces connexes. A titre d'exemple, en présence de zones évidées dans le modèle 3D, comme c'est le cas entre l'anse et le fond d'un panier modélisé par exemple, il est possible de déplier des portions du modèle 3D indépendamment les unes des autres. Par exemple l'anse du panier discrétisée dans le modèle est dépliée indépendamment du reste du modèle du panier.

De préférence, à l'étape b), le dépliage est réalisé en minimisant le nombre de surfaces du modèle 2D et en minimisant le nombre d'orphelins dans la table de connectivité du modèle 2D. Un maillage 3D, respectivement 2D, est caractérisé par une table de connectivité, qui indique pour chaque sommet d'un élément surfacique, respectivement d'un polygone du maillage, à quels éléments surfaciques, respectivement polygones, il appartient. Un « orphelin » correspond à l'impossibilité mathématique de conserver, pour un sommet d'un polygone dans le modèle 2D, l'information de connectivité du sommet de l'élément surfacique correspondant.

De préférence, le taux d'orphelins, calculé comme le rapport du nombre d'orphelins sur le nombre de points du modèle 3D, exprimé en pourcents, est inférieur à 30 %, de préférence inférieur à 10 %, voire inférieur à 5 %.

On obtient ainsi un modèle 2D aisément manipulable par l'opérateur mettant en œuvre le procédé, et on facilite la production du modèle 3D texturé. Comme cela sera illustré par la suite, l'opérateur peut plus facilement intervenir sur le modèle 2D texturé ainsi déplié pour corriger les artefacts qu'il pourrait observer sur le modèle 3D texturé.

Le dépliage peut être réalisé de manière automatique avec un logiciel connu par l'homme du métier, comme par exemple Blender, Autodesk Maya, Cinema 4D. En variante, il peut être effectué de manière semi-automatique, l'opérateur pouvant outrepasser les limitations des méthodes automatiques, notamment rencontrées dans le cas où ces méthodes automatiques génèrent un nombre élevé de surfaces non connexes.

A l'étape c), le modèle 2D est texturé à partir des informations de pixel d'images de la banque. La génération du modèle 2D texturé facilite la génération du modèle 3D texturé, comme cela sera expliqué à l'étape d) ci-dessous.

L'étape c) est mise en œuvre pour au moins un, de préférence pour tous les éléments surfaciques du modèle 3D généré à l'étape a).

A l'étape i), on identifie les images de la banque qui représentent la zone de la scène et qui ont été acquises par une caméra dont le plan image présente une direction normale, dans la position d'acquisition correspondante, faisant un angle inférieur à 10°, de préférence inférieur à 5°, mieux inférieur à 3°, avec une direction normale à la face de l'élément surfacique. L'identification peut être effectuée, à partir de la connaissance pour chaque image de la banque de la position et/ou de l'orientation de la caméra ayant acquise l'image. La position et/ou l'orientation de la caméra peut être une métadonnée ou résulter du traitement photogrammétrique des images. Par exemple, une image est écartée lorsqu'elle a été prise par une caméra orientée dans une direction sensiblement opposée à la zone de l'objet délimité par l'élément surfacique considéré.

L'étape i) vise à déterminer les images qui apparaissent les mieux orientées par rapport à l'élément surfacique, de manière à lui attribuer des informations de pixel contenues dans l'une de ces images.

Pour améliorer encore la qualité de texturation à l'étape d), le procédé comporte une étape i') intermédiaire entre les étapes i) et ii), dans laquelle on identifie les images nettes parmi les images déterminées à l'étape i).

La netteté d'une image peut être déterminée au moyen d'au moins un descripteur tel que le maximum du gradient. Le gradient de l'image mesure la variation locale de l'intensité colorimétrique des pixels. Plus la valeur du gradient est grande, plus les détails de l'image sont visibles. La netteté peut aussi être déterminée simplement et aisément par l' œil de l'opérateur mettant en œuvre le procédé.

Le procédé comporte en outre une étape i") intermédiaire entre les étapes i') et ii), dans laquelle on identifie, parmi les images déterminées aux étapes i) et i'), l'image prise par la caméra dont le plan image est le plus proche de l'élément surfacique. Ainsi, on identifie parmi les images les mieux orientées et les plus nettes, celle qui a été acquise le plus près de la zone de l'objet modélisée par l'élément surfacique. Une telle image est celle qui comporte le plus de pixels, et donc d'informations associées, décrivant la zone de l'objet modélisée par l'élément surfacique.

Dans une variante de mise en œuvre du procédé, à l'étape i), on peut sélectionner l'image dont le plan image de la caméra présente une direction normale, dans la position d'acquisition correspondante, faisant le plus petit angle, avec une direction normale à la face de l'élément surfacique. Une telle image n'est pas nécessairement la plus nette et/ou celle acquise par la caméra dont le plan image est la plus proche de la zone de l'objet modélisé par l'élément surfacique, mais présente l'avantage d'être la mieux orientée par rapport à l'élément surfacique.

A l'étape ii), on sélectionne l'image identifiée à l'étape i").

Dans une variante, préalablement à l'étape i), on peut sélectionner parmi l'ensemble des images de la banque, un sous ensemble d'images qui ont été acquises en un emplacement d'acquisition situé à une distance inférieure à une distance maximale prédéterminée de l'élément surfacique. Les images identifiées à l'étape i) le sont alors dans le sous-ensemble. Le temps de calcul à l'étape i) est ainsi réduit, ainsi que le temps d'exécution de l'étape c).

Par ailleurs, afin d'identifier les images à l'étape i), des points caractéristiques communs au modèle 3D et aux images de la banque peuvent être reconnus. Cette reconnaissance peut s'effectuer par exemple au moyen d'un réseau de neurones entraîné à reconnaître des points caractéristiques ou de tout algorithme d'optimisation, par exemple par moindres carrés.

A l'étape iii), on associe au polygone correspondant du modèle 2D, une propriété de texture à partir d'une information apportée par chaque pixel de l'image sélectionnée qui se superpose à l'élément surfacique. On génère ainsi un modèle 2D texturé.

Ce pixel peut être superposé partiellement avec l'élément surfacique, lorsqu'il est superposé avec une arrête reliant deux sommets de l'élément surfacique. Il peut être superposé entièrement à l'intérieur de l'élément surfacique.

La correspondance étant univoque entre un polygone et l'élément surfacique, les informations du ou de tous les pixels superposés partiellement et/ou intégralement à l'élément surfacique peuvent être associées au polygone correspondant. Ainsi, un polygone peut comporter un nombre de valeurs de la propriété de texture correspondant au nombre de pixels pour lesquelles une information a été associée.

Par ailleurs, plusieurs informations de texture peuvent être attribuées à un même polygone, notamment lorsque plusieurs informations de pixels sont attribuées à un même pixel.

Au moins un pixel se superpose au moins partiellement à l'intérieur d'au moins un, de préférence de chaque polygone.

Enfin, des traitements additionnels peuvent être effectués sur le modèle 2D texturé, notamment lorsque les textures reconstruites à partir de plusieurs images de la banque contiennent des variations de teinte et/ou de luminosité et/ou de contraste entre les différentes images. Par exemple, dans le modèle 2D texturé, un polygone peut présenter après texturation une teinte moyenne plus terne que les polygones auxquels il est connecté. Pour atténuer voire éliminer de telles différences de teinte et/ou de luminosité et/ou de contraste, un lissage et/ou un filtrage peuvent être appliqués pour réduire le gradient de propriété de texture entre les polygones connexes.

Enfin, à l'étape d), on produit le modèle 3D texturé par correspondance du modèle 3D et du modèle 2D texturé.

Comme cela a été indiqué, au cours du dépliage à l'étape b), une correspondance a été établie entre chaque polygone et son élément surfacique correspondant.

L'ensemble des informations de texture associé au modèle 2D à l'étape iii) peut donc être transmis aisément au modèle 3D par simple opération bijective, qui est par exemple réalisée automatiquement au moyen d'un logiciel de dépliage tel que ceux mentionnés à l'étape b).

Par ailleurs, le procédé peut être mis en œuvre pour texturer un modèle 3D modélisant plusieurs scènes d'un environnement, la banque d'images comportant des images représentant chacune au moins une portion d'une des scènes. De préférence, les scènes sont contiguës les unes aux autres. Préalablement à l'étape a), les scènes peuvent être discrétisées une à une et indépendamment les unes des autres à partir de la banque d'images, et les nuages de points représentant chaque scène sont ensuite assemblés les uns aux autres au moyen de logiciel adaptés, tel que Photoscan. En variante, les scènes peuvent être discrétisées conjointement, de manière à former un unique nuage de points.

Le procédé peut en outre comporter l'affichage sur un écran, par exemple d'un ordinateur ou d'un casque de réalité augmentée, d'une représentation visuelle du modèle 3D texturé d'une scène. Notamment, une couleur et/ou une transparence peut être attribuée pour l'affichage du modèle, à l'information de texture. Par exemple, l'information de texture peut être une température et différentes couleurs sont attribuées à des températures différentes. L'observateur peut ainsi visualiser aisément des zones chaudes, par exemple en rouge, et des zones froides, par exemple en bleu en se déplaçant virtuellement dans la scène.

L'invention concerne encore un ordinateur pour mettre en œuvre le procédé selon l'invention, l'ordinateur comportant de préférence :
a. au moins une unité de stockage dans laquelle sont enregistrées la banque d'images et le cas échéant les métadonnées associées, et des instructions pour la mise en œuvre du procédé, et
b. un processeur pour exécuter les instructions.

L'invention pourra être mieux comprise à la lecture de la description détaillée qui va suivre, d'exemples de mise en œuvre non limitatifs de celle-ci, et à l'examen du dessin annexé, sur lequel :
- la figure 1 représente une scène d'un environnement à modéliser,
- la figure 2 illustre une acquisition de la scène,
- la figure 3 représente un nuage de points représentant un objet de la scène,
- la figure 4 représente l'objet maillé de la scène modélisée,
- les figures 5a et 5b représentent un modèle 2D obtenu par un dépliage semi-automatique et par un dépliage automatique au moyen du logiciel Blender respectivement,
- la figure 6 illustre les étapes d'identification d'images et de sélection d'une image pour un élément surfacique de l'objet maillé,
- la figure 7 illustre l'étape iii) de l'association d'une propriété de texture à un polygone du maillage 2D à partir des informations de pixel de l'image sélectionnée.
- la figure 8 représente le modèle 2D texturé obtenus à partir du modèle 2D de la figure 5a, et
- la figure 9 est une image représentant l'affichage du modèle 3D texturé produit à partir du modèle 2D texturé de la figure 8.

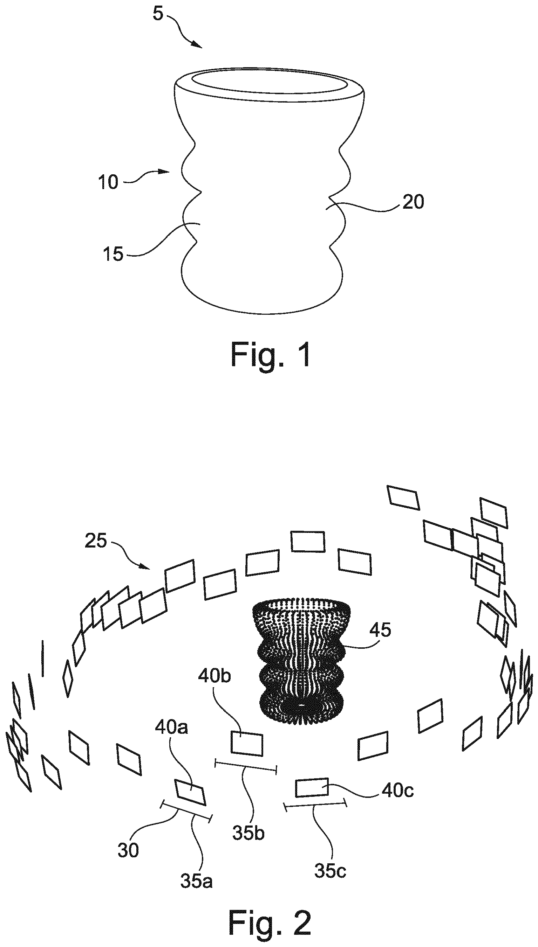

La figure 1 représente une scène 5 d'un environnement 10. Pour illustrer la mise en œuvre du procédé, on s'intéressera plus spécifiquement par la suite à un objet 15 inclus dans la scène. En l'espèce, l'objet est un vase qui présente une enveloppe externe 20 galbée.

Un dispositif d'acquisition d'images 25 comportant une caméra 30 est disposé dans l'environnement en une pluralité d'emplacements d'acquisition 35a-c. La caméra acquiert au moins une image 40a-c de la scène en chaque emplacement d'acquisition. Les emplacements d'acquisition sont choisis de telle sorte que les images acquises en au moins deux emplacements se recouvrent.

Une banque d'images est ainsi formée, comportant l'ensemble des images de la scène acquises par le dispositif d'acquisition d'images.

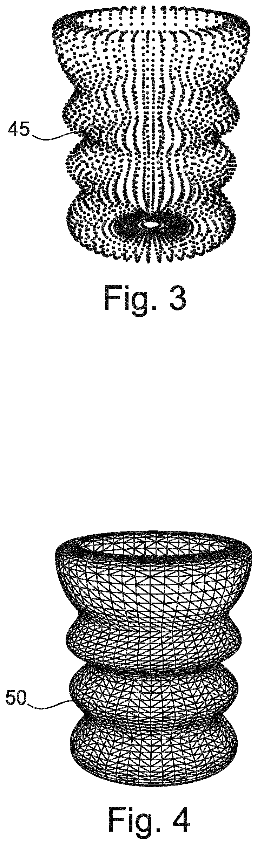

Un nuage de points 45 est ensuite généré par traitement photogrammétrique des images au moyen du logiciel Photoscan, puis est maillé au moyen d'éléments surfaciques 50 de forme triangulaire. On obtient ainsi un modèle 3D maillé de la scène, qui est illustré sur la figure 4.

Par la suite, la texturation de la scène est mise en œuvre.

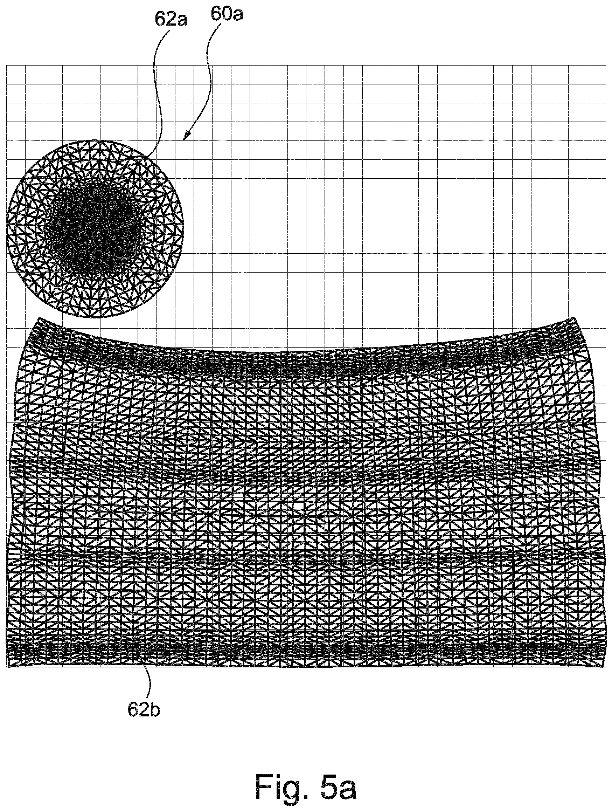

Le modèle 3D est ensuite déplié pour obtenir un modèle 2D 60a formé d'un maillage plan comportant deux surfaces maillées 2D connexes 62a et 62b, comme illustré à la figure 5a. La surface 62b correspond à la face latérale du vase dans le plan et la surface 62a correspond au fond du vase déplié dans le plan. Le dépliage semi-automatique illustré sur la figure 5a est réalisé en minimisant le nombre de surfaces 2D.

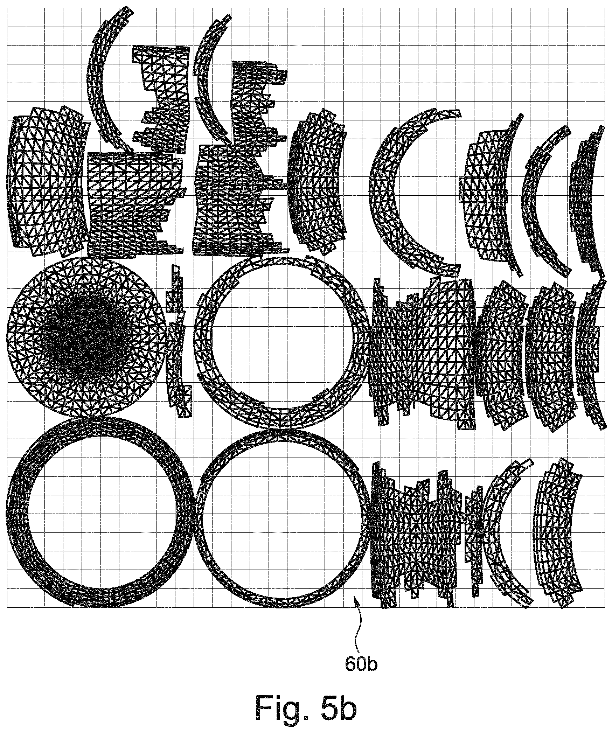

Comme cela apparait distinctement, le dépliage semi-automatique illustré sur la figure 5a, en comparaison du dépliage automatique illustré sur la figure 5b, outre le fait qu'il minimise de nombre de surfaces 2D, conserve mieux la connectivité du maillage 3D. La figure 5b illustre un modèle 2D 60b obtenu par dépliage automatique au moyen du logiciel Blender. Il résulte en un plus grand nombre de surfaces, et notamment des surfaces non connexes. Il est en outre plus difficile pour l'opérateur d'associer visuellement dans le modèle 2D 60b, le polygone correspondant à un élément surfacique du modèle 3D.

Une texture est ensuite associée au modèle 2D.

A des fins illustratives, on s'intéresse ici à l'un 55 des éléments surfaciques modélisant l'objet. Le traitement détaillé ci-après est mis en œuvre pour chaque élément surfacique discrétisant la scène.

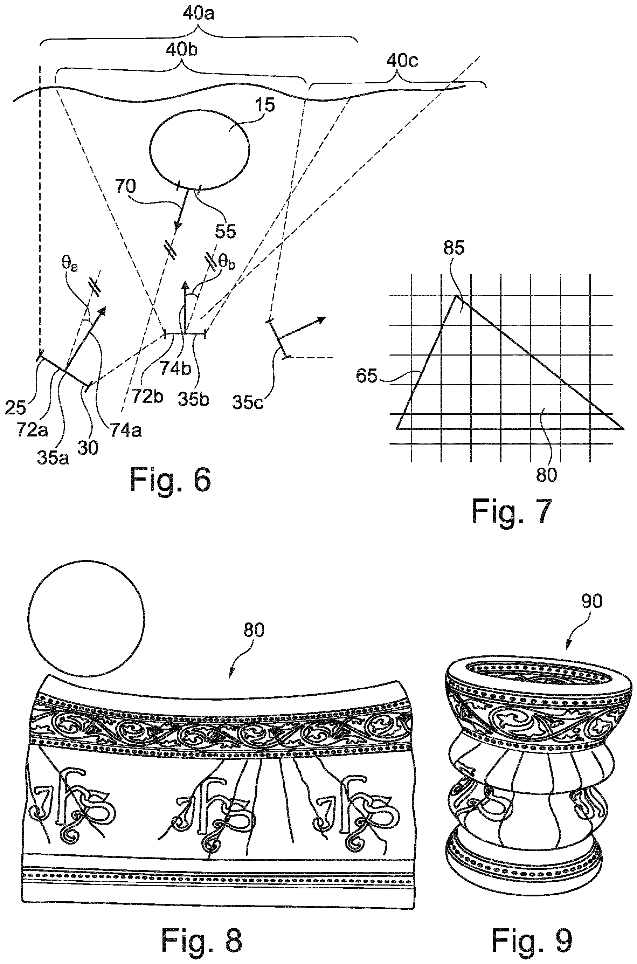

La normale 70 de l'élément surfacique, extérieure à l'objet, est calculée à partir de la position des points sommets de l'élément. On identifie ensuite les images de la banque qui représentent la zone de la scène délimitée dans le modèle 3D par l'élément surfacique, qui sont dans l'exemple illustré sur la figure 6, les images 40a et 40b.

Parmi les images 40a et 40b, on identifie la ou les images qui ont été acquises par une caméra dont le plan image 72a-b présente une direction normale 74a-b, dans la position d'acquisition correspondante, faisant un angle θ_{a-b} inférieur à 10° avec une direction normale à la face de l'élément surfacique.

Dans l'exemple illustré sur la figure 6, les deux images 40a et 40b remplissent la condition citée au paragraphe précédent.

Chacune de ces images peut être sélectionnée et être superposée avec l'élément surfacique à l'étape ii) du procédé. Pour améliorer la qualité de la texturation, les images 40a et 40b étant nettes, on identifie l'image dont le plan image est le plus proche de l'élément surfacique. En l'occurrence, sur la figure 6, il s'agit de l'image référencée 40b, qui contient le plus de détails de la zone de la scène délimitée dans le modèle 3D par l'élément surfacique.

L'image 40b est donc sélectionnée pour texturer l'élément surfacique 55. A cette fin, la texturation est d'abord réalisée sur le polygone correspondant 65 du modèle 2D. Pour ce faire, l'image 40b est projetée sur le modèle 2D de manière à attribuer au polygone, une propriété de texture à partir des informations de pixels de l'image 40b se superposant à l'élément surfacique correspondant.

Lorsqu'un pixel 80 de l'image est superposé intégralement au polygone, on définit la propriété de texture associée à la région présentant les dimensions du pixel en lui associant la couleur du pixel correspondant.

Dans le cas où un pixel de l'image est superposé partiellement à l'élément surfacique, comme c'est le cas par exemple du pixel référencé 85 sur la figure 7, on attribue la propriété de texture du pixel à la région présentant la forme de la partie du pixel totalement recouverte par le polygone du modèle 2D.

Ainsi, chaque polygone présente une texture reproduisant fidèlement les détails de la zone de la scène qu'il modélise.

La succession des étapes i) à iii) décrite ci-dessus est réalisée de préférence pour tous polygones du modèle 2D correspondants aux différents éléments surfaciques du modèle 3D. Ainsi, on obtient un maillage 2D texturé.

Le modèle 3D peut ensuite être texturé en attribuant, de manière univoque, à chaque élément surfacique, la ou les textures associées au polygone correspondant, comme cela est illustré sur la figure 9.

En particulier, le stockage des propriétés de texture de chaque élément surfacique est facilité, puisque les positions des polygones sont connues. Il n'est donc pas nécessaire de stocker en mémoire d'un ordinateur mettant en œuvre le procédé, les textures sous un format 3D. On limite ainsi le recours à des moyens de traitement puissants, tels qu'une carte graphique d'un ordinateur, pour afficher le modèle texturé.

## Revendications

1. Procédé mis en œuvre par ordinateur de texturation d'un modèle 3D d'au moins une scène (5), le procédé comportant :
a) le maillage avec des éléments surfaciques (50;55) d'un nuage de points (45) représentant la scène, de façon à générer le modèle 3D, chaque élément surfacique représentant une zone de la scène,
b) le dépliage du modèle 3D pour obtenir un modèle 2D formé d'un maillage plan (60a;60b) formé de polygones (65), chaque élément surfacique correspondant à un unique polygone et inversement, et
c) pour au moins un, de préférence tous les éléments surfaciques,
i) l'identification, parmi une banque d'images (40a;40b), des images représentant la zone de la scène et qui ont été acquises par une caméra dont le plan image (72a-b) présente une direction normale, dans la position d'acquisition correspondante, faisant un angle (θ_{a-b}) inférieur à 10°, de préférence inférieur à 5°, mieux inférieur à 3°, avec une direction normale (70) à la face de l'élément surfacique,
i') l'identification des images nettes parmi les images déterminées à l'étape i),
i") l'identification, parmi les images déterminées aux étapes i) et i'), l'image prise par la caméra dont le plan image est le plus proche de l'élément surfacique,
ii) la sélection de l'image identifiée à l'étape i"), et,
iii) l'association d'une propriété de texture au polygone (65) correspondant, à partir d'une information d'un pixel (80;85) de l'image sélectionnée qui se superpose à l'élément surfacique (55), de manière à produire un modèle 2D texturé, et
d) la production du modèle 3D texturé par mise en correspondance du modèle 3D et du modèle 2D texturé.

2. Procédé selon la revendication 1, comportant une étape préalable à l'étape a) dans laquelle on discrétise la scène sous la forme du nuage de points (45), à partir d'une banque d'images, de préférence identique à la banque d'images utilisée à l'étape i), comportant des images représentant chacune une portion de la scène (5) vue par au moins une caméra et dans laquelle au moins deux images acquises en différentes positions représentent des portions de la scène (5) qui se recouvrent.

3. Procédé selon la revendication 1, dans lequel à l'étape i), on sélectionne l'image dont le plan image de la caméra présente une direction normale, dans la position d'acquisition correspondante, faisant le plus petit angle, avec une direction normale à la face de l'élément surfacique.

4. Procédé selon l'une quelconque des revendications précédentes, dans lequel préalablement à l'étape a), on génère la banque d'images mise en œuvre à l'étape i) en déplaçant, en une pluralité d'emplacements d'acquisition (35a-c), un dispositif de scan (25) comportant au moins une caméra (30), et on acquiert, en chaque emplacement d'acquisition, une portion de la scène vue par le dispositif de scan en prenant au moins une image au moyen de la caméra, les emplacements d'acquisition étant choisis de telle sorte que les portions de la scène vues par le dispositif de scan en deux emplacements d'acquisition consécutifs respectifs se recouvrent au moins partiellement.

5. Procédé selon l'une quelconque des revendications précédentes, dans lequel le taux de recouvrement entre lesdites deux images est supérieur à 70 %, de préférence supérieur à 80 %, de préférence supérieur à 90 %.

6. Procédé selon l'une quelconque des revendications précédentes, dans lequel plus de 50 pixels par mm², voire plus de 80 pixels par mm², mieux plus de 100 pixels par mm², se superposent au moins partiellement à l'intérieur d'au moins un, de préférence de chaque polygone, sur la base de l'aire du polygone.

7. Procédé selon l'une quelconque des revendications précédentes, dans lequel on affiche sur un écran, par exemple d'un ordinateur ou d'un casque de réalité augmentée, une représentation visuelle du modèle numérique 3D texturé d'une scène.

8. Procédé selon l'une quelconque des revendications précédentes, dans lequel les images de la banque d'images comportent des métadonnées comportant, pour chaque pixel d'une image, au moins une propriété du matériau constitutif de la partie de la scène imagée par le pixel.

9. Procédé selon la revendication précédente, dans lequel la propriété du matériau est une propriété thermique et/ou une propriété électrique et/ou une propriété mécanique et/ou une propriété magnétique et/ou une propriété radiographique.

10. Procédé selon l'une quelconque des revendications précédentes, dans lequel préalablement à l'étape a), la discrétisation de la scène est obtenue par traitement photogrammétrique d'images de la banque d'images.

11. Procédé selon l'une quelconque des revendications précédentes, le maillage formé à l'étape a) comporte, voire consiste en des éléments quadrangulaires et/ou de préférence des éléments surfaciques triangulaires (50;55).

12. Procédé selon l'une quelconque des revendications précédentes, chaque polygone du modèle 2D étant de forme et de dimensions identiques à l'élément surfacique qui lui correspond dans le modèle 3D.

13. Procédé selon l'une quelconque des revendications précédentes, la propriété de texture étant la couleur du pixel ou une métadonnée associée au pixel.

14. Ordinateur pour mettre en œuvre le procédé selon l'une quelconque des revendications précédentes, l'ordinateur comportant de préférence :
a. au moins une unité de stockage dans laquelle sont enregistrées la banque d'images et les métadonnées associées, et des instructions pour la mise en œuvre du procédé, et
b. un processeur pour exécuter les instructions.

## Patentansprüche

1. Computerimplementiertes Verfahren zur Texturierung eines 3D-Modells mindestens einer Szene (5), wobei das Verfahren aufweist:
a) die Vermaschung einer die Szene darstellenden Punktwolke (45) mit Oberflächenelementen (50; 55), um das 3D-Modell zu generieren, wobei jedes Oberflächenelement eine Zone der Szene darstellt,
b) das Entfalten des 3D-Modells, um ein 2D-Modell zu erhalten, das von einer von Polygonen (65) gebildeten ebenen Vermaschung (60a; 60b) gebildet wird, wobei jedes Oberflächenelement einem einzigen Polygon entspricht und umgekehrt, und
c) für mindestens ein, vorzugsweise alle Oberflächenelemente,
i) die Identifizierung, aus einer Bank von Bildern (40a; 40b), der Bilder, die die Zone der Szene darstellen und die von einer Kamera erfasst wurden, deren Bildebene (72a-b) in der entsprechenden Erfassungsposition eine normale Richtung aufweist, die einen Winkel (θ_{a+b}) von weniger als 10°, vorzugsweise weniger als 5°, besser weniger als 3°, mit einer Richtung (70) normal zur Seite des Oberflächenelements bildet,
i') die Identifizierung der scharfen Bilder unter den im Schritt i) bestimmten Bildern,
i") die Identifizierung unter den in den Schritten i) und i') bestimmten Bildern des von der Kamera aufgenommenen Bilds, deren Bildebene dem Oberflächenelement am nächsten ist,
ii) die Auswahl des im Schritt i") identifizierten Bilds, und
iii) die Zuordnung einer Textureigenschaft zum entsprechenden Polygon (65), ausgehend von einer Information eines Pixels (80; 85) des ausgewählten Bilds, das das Oberflächenelement (55) überlagert, um ein texturiertes 2D-Modell zu erzeugen, und
d) die Erzeugung des texturierten 3D-Modells durch Abgleich des 3D-Modells und des texturierten 2D-Modells.

2. Verfahren nach Anspruch 1, das einen Schritt vor dem Schritt a) aufweist, in dem die Szene in Form der Punktwolke (45) ausgehend von einer Bilderbank, vorzugsweise gleich der im Schritt i) verwendeten Bilderbank, diskretisiert wird, die Bilder aufweist, die je einen Teil der Szene (5) darstellen, der von mindestens einer Kamera gesehen wird und in dem mindestens zwei in unterschiedlichen Positionen erfasste Bilder Teile der Szene (5) darstellen, die sich überdecken.

3. Verfahren nach Anspruch 1, wobei im Schritt i) das Bild ausgewählt wird, dessen Bildebene der Kamera eine normale Richtung in der entsprechenden Erfassungsposition aufweist, die den kleinsten Winkel mit einer Richtung normal zur Seite des Oberflächenelements bildet.

4. Verfahren nach einem der vorhergehenden Ansprüche, wobei vor dem Schritt a) die im Schritt i) verwendete Bilderbank generiert wird, indem an einer Vielzahl von Erfassungsstellen (35a-c) eine Scanvorrichtung (25) verschoben wird, die mindestens eine Kamera (30) aufweist, und an jeder Erfassungsstelle ein von der Scanvorrichtung gesehener Teil der Szene erfasst wird, indem mindestens ein Bild mittels der Kamera aufgenommen wird, wobei die Erfassungsstellen so gewählt werden, dass die von der Scanvorrichtung an zwei aufeinanderfolgenden Erfassungsstellen gesehenen Teile der Szene sich zumindest teilweise überdecken.

5. Verfahren nach einem der vorhergehenden Ansprüche, wobei der Überdeckungsgrad zwischen den zwei Bildern höher als 70%, vorzugsweise höher als 80%, vorzugsweise höher als 90% ist.

6. Verfahren nach einem der vorhergehenden Ansprüche, wobei mehr als 50 Pixel pro mm², sogar mehr als 80 Pixel pro mm², besser mehr als 100 Pixel pro mm², sich zumindest teilweise innerhalb mindestens eines, vorzugsweise jedes Polygons auf der Basis der Fläche des Polygons überlagern.

7. Verfahren nach einem der vorhergehenden Ansprüche, wobei auf einem Bildschirm, zum Beispiel eines Computers oder eines Helms mit erweiterter Realität, eine visuelle Darstellung des texturierten digitalen 3D-Modells einer Szene angezeigt wird.

8. Verfahren nach einem der vorhergehenden Ansprüche, wobei die Bilder der Bilderbank Metadaten aufweisen, die für jedes Pixel eines Bilds mindestens eine Eigenschaft des den vom Pixel abgebildeten Bereich der Szene bildenden Materials aufweisen.

9. Verfahren nach dem vorhergehenden Anspruch, wobei die Eigenschaft des Materials eine thermische Eigenschaft und/oder eine elektrische Eigenschaft und/oder eine mechanische Eigenschaft und/oder eine magnetische Eigenschaft und/oder eine radiographische Eigenschaft ist.

10. Verfahren nach einem der vorhergehenden Ansprüche, wobei vor dem Schritt a) die Diskretisierung der Szene durch photogrammetrische Verarbeitung von Bildern der Bilderbank erhalten wird.

11. Verfahren nach einem der vorhergehenden Ansprüche, wobei die im Schritt a) gebildete Vermaschung viereckige Elemente und/oder vorzugsweise dreieckige Oberflächenelemente (50; 55) aufweist oder auch daraus besteht.

12. Verfahren nach einem der vorhergehenden Ansprüche, wobei jedes Polygon des 2D-Modells die gleiche Form und Abmessungen hat wie das Oberflächenelement, das ihm im 3D-Modell entspricht.

13. Verfahren nach einem der vorhergehenden Ansprüche, wobei die Textureigenschaft die Farbe des Pixels oder ein dem Pixel zugeordneter Metadatenwert ist.

14. Computer zur Durchführung des Verfahrens nach einem der vorhergehenden Ansprüche, wobei der Computer vorzugsweise aufweist:
a. mindestens eine Speichereinheit, in der die Bilderbank und die zugeordneten Metadaten und Anweisungen zur Durchführung des Verfahrens gespeichert sind, und
b. einen Prozessor zur Ausführung der Anweisungen.

## Claims

1. Computer-implemented method for texturing a 3D model of at least one scene (5), the method comprising:
a)meshing, with surface elements (50; 55), a points cloud (45) representing the scene, so as to generate the 3D model, each surface element representing an area of the scene,
b) unfolding the 3D model so as to obtain a 2D model formed of a plane mesh (60a; 60b) formed of polygons (65), each surface element corresponding to a single polygon, and vice versa, and
c)for at least one, preferably all of the surface elements,
i) identifying, from among an image bank (40a; 40b), the images representing the area of the scene and which have been acquired by a camera whose image plane (72a-b) has a normal direction, in the corresponding acquisition position, forming an angle (θ_{a-b}) less than 10°, preferably less than 5°, better still less than 3° with a direction normal (70) to the face of the surface element,
i') identifying sharp images from among the images determined in step i),
i") identifying, from among the images determined in steps i) and i'), the image taken by the camera whose image plane is closest to the surface element,
ii) selecting the image identified in step i"), and
iii) associating a texture property with the corresponding polygon (65), from a piece of information of a pixel (80; 85) of the selected image which is superimposed on the surface element (55), so as to produce a textured 2D model, and
d) producing the textured 3D model by matching the 3D model and the textured 2D model.

2. Method according to Claim 1, comprising a step prior to step a) in which the scene is discretized in the form of the points cloud (45), from an image bank preferably identical to the image bank used in step i) comprising images each representing a portion of the scene (5) seen by at least one camera and in which at least two images acquired at different positions represent portions of the scene (5) that overlap.

3. Method according to Claim 1, wherein, in step i), the image is selected for which the image plane of the camera has a normal direction, in the corresponding acquisition position, forming the smallest angle, with a direction normal to the face of the surface element.

4. Method according to any one of the preceding claims, wherein, prior to step a), the image bank implemented in step i) is generated by moving, in a plurality of acquisition locations (35a-c), a scanning device (25) comprising at least one camera (30), and, at each acquisition location, a portion of the scene seen by the scanning device is acquired by taking at least one image by means of the camera, the acquisition locations being selected such that the portions of the scene seen by the scanning device in two respective consecutive acquisition locations at least partially overlap.

5. Method according to any one of the preceding claims, wherein the rate of overlap between said two images is greater than 70%, preferably greater than 80%, preferably greater than 90%.

6. Method according to any one of the preceding claims, wherein more than 50 pixels per mm², or even more than 80 pixels per mm², better still more than 100 pixels per mm², are at least partially superimposed inside at least one, preferably each polygon, on the basis of the area of the polygon.

7. Method according to any one of the preceding claims, wherein a visual representation of the textured 3D digital model of a scene is displayed on a screen, for example of a computer or an augmented reality headset.

8. Method according to any one of the preceding claims, wherein the images of the image bank comprise metadata comprising, for each pixel of an image, at least one property of the material constituting the portion of the scene imaged by the pixel.

9. Method according to the preceding claim, wherein the property of the material is a thermal property and/or an electrical property and/or a mechanical property and/or a magnetic property and/or a radiographic property.

10. Method according to any one of the preceding claims, wherein, prior to step a), the discretization of the scene is obtained by photogrammetric processing of images in the image bank.

11. Method according to any one of the preceding claims, wherein the mesh formed in step a) comprises or even consists of quadrangular elements and/or preferably triangular surface elements (50; 55).

12. Method according to any one of the preceding claims, each polygon of the 2D model having a shape and dimensions identical to the surface element corresponding thereto in the 3D model.

13. Method according to any one of the preceding claims, the texture property being the colour of the pixel or a piece of metadata associated with the pixel.

14. Computer for implementing the method according to any one of the preceding claims, the computer preferably comprising:
a. at least one storage unit which stores the image bank and the associated metadata, and instructions for the implementation of the method, and
b. a processor for executing the instructions.
